Europäisches Patentamt

European Patent Office

Office européen des brevets

(19)

(11) Publication number: **0 603 926 A1**

# EUROPEAN PATENT APPLICATION

(12)

(21) Application number: **93203347.5**

(22) Date of filing: **30.11.93**

(51) Int. Cl.5: **B01D 3/42**

(30) Priority: **14.12.92 BE 9201095**

(43) Date of publication of application:
**29.06.94 Bulletin 94/26**

(84) Designated Contracting States:
**DE FR GB IT NL**

(71) Applicant: **"THYCO", de besloten
vennootschap met beperkte
aansprakelijkheid
Boslaan 20
B-3650 Dilsen-Lanklaar(BE)**

(72) Inventor: **Holtappels, Christian
Dokter Lenstralaan 40 A
B-3650 Dilsen-Lanklaar(BE)**
Inventor: **Elsen,André
Driesstraat 44
B-3550 Heusden-Zolder(BE)**

(74) Representative: **Callewaert, Jean
Bureau Callewaert b.v.b.a.
Brusselse steenweg 108
B-3090 Overijse (BE)**

(54) **Method and device for distilling at least one predetermined liquid.**

(57) Method for distilling at least one predetermined liquid from an essentially liquid mixture, said mixture being heated by means of a medium (2) which is heated up to a first set temperature, said first temperature being set in accordance with the evaporation temperature of said liquid, characterised in that a differential is set between a set evaporation temperature and the first temperature to be reached, said first temperature being determined on the basis of said evaporation temperature and said differential, said temperature of the medium being sampled repeatedly, each time determining the supply of energy for heating said medium on the basis of the sample value and said first temperature.

Fig.1

EP 0 603 926 A1

This invention concerns a method for distilling at least one predetermined liquid from an essentially liquid mixture, the mixture being heated by means of a medium which is heated up to a first set temperature, said first temperature being set according to the evaporation temperature of said liquid.

Such methods are well-known and are used for example for distilling alcohol or recycling solvents in polluted mixtures. The mixture to be distilled is heated indirectly, namely by using a medium such as water or oil, which is heated up in a conventional way. The temperature to which the medium is heated is determined according to the evaporation temperature of the liquid to be distilled or recovered. In the known method, the temperature regulation of the medium is provided by a thermostat which switches off the heating whenever the medium reaches the first temperature. The heating is switched on again when the temperature of the medium falls below a lower temperature.

A disadvantage of the known method is that the difference between the temperature at which the heating is switched on and the temperature at which it is switched off again is usually at least 10°C. This produces in the mixture temperature fluctuations, which can have disadvantageous consequences for the distillation process. For example, in the recycling of solvents, where a particular solvent is to be distilled out of the polluted mixture, the temperature control is critical. In order to prevent other liquids present in the mixture, whose evaporation temperature is near that of the solvent being distilled, also getting into the distillate, it is necessary for the temperature fluctuations within the mixture to be kept as low as possible during the evaporation phase of the solvent to be distilled. Such fine regulation cannot be achieved in an economic manner with the known thermostats.

The invention has as its aim a method for distilling at least one predetermined liquid from an essentially liquid mixture, the heating of the medium being controlled in such a way that the temperature curve of the medium shows a more or less continuous pattern in the phase in which the liquid to be distilled evaporates.

A method according to the invention is characterised in that a differential is set between a set evaporation temperature and the first temperature to be reached, said first temperature being determined on the basis of said evaporation temperature and said differential and said temperature of the medium being sampled repeatedly and a supply of energy for heating said medium being determined from the sampled value and said first temperature. By setting a differential, and by using said differential and the evaporation temperature to determine said first temperature, a correlation is obtained between said first temperature and the evaporation temperature. Further, by sampling the temperature of the medium repeatedly, each time determining the energy supply from the sampled value, it is possible, at least in the evaporation phase, for the temperature variations of the liquid to be kept limited to around the set first temperature, and so to obtain a more or less continuous temperature curve of the medium. Due to the fact that the temperature of the medium can be well controlled in this way, the evaporation can similarly be controlled precisely, so reducing signficantly the risk of other liquids getting into the distillate.

A first preferred embodiment of a method according to the invention is characterized in that said first temperature is determined from the sum of said evaporation temperature and said differential. This simplifies the determination of the first temperature.

A second preferred embodiment of a method according to the invention is characterized in that a second temperature is sampled from the vapour coming from the heated mixture and compared with a set evaporation temperature for the liquid to be distilled, said energy supply being interrupted whenever said second temperature rises above said set evaporation temperature. In this way, it is a simple matter to determine when the liquid to be distilled has completely evaporated and the process can be interrupted.

A third preferred embodiment of the method according to the invention is characterized in that a maximum temperature for the medium is set, and that said heating of the medium is switched off if said maximum temperature is reached. This provides a built-in safety measure, in order to prevent overheating.

It is favourable for a maximum operating time to be set, and for said energy supply to be interrupted if said maximum operating time is exceeded. This provides a further safety measure.

The invention also concerns a device for carrying out the method. Such a device is characterized in that the regulating device has a first and a second input, at which are presented, respectively, an evaporation temperature of the fluid and a differential between said evaporation temperature and said first temperature, which regulating device is further provided to determine said first temperature from said first differential and evaporation temperature, said regulating device being further connected to sampling means which have a first temperature sensor to sample the temperature of the medium, said regulating device serving to determine said energy supply on the basis of the sample values and the first temperature.

The invention is further described with reference to the drawings, where:

Fig. 1 is a schematic diagram of an embodiment of a device according to the invention;

Fig. 2 is a block diagram of the energy supply control circuit;

Fig. 3 is a time-temperature diagram showing the curves of various parameters that are of importance for the distillation process;

Fig. 4 is a block diagram of the electrical structure of the device.

In the drawings, the same or analogous elements are indicated by the same reference numbers.

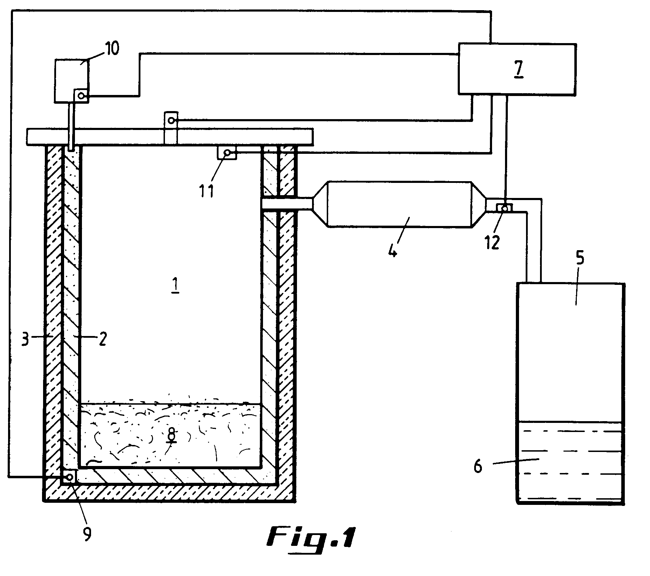

The device according to the invention, Fig. 1 showing an example of an embodiment, comprises a container 1 destined to hold a mixture 8 to be distilled. The mixture is essentially liquid. For instance, the mixture may contain alcohol, which has to be distilled out. In another application, the mixture comprises waste products in which pollutants such as paint residues, fats and solvents or oil derivatives are present. In order to dispose of these waste substances in an environmentally-friendly way, certain liquids such as solvents or oil derivatives are recovered in an environmentally-friendly way.

In distilling for e.g. the purposes of recovery, it is important to monitor the evaporation temperature precisely, as it may be that in the mixture 8 several solvents or other liquids are present whose evaporation temperatures differ from each other by only a few degrees. If the temperature fluctuations are too great, for example of the order of 10°C, there is the danger that several solvents will be distilled at once, so that the degree of purity of the distillate will be insufficient.

In order to keep the temperature curve inside the distillation device as closely under control as possible, said device is provided with a first temperature sensor 9 mounted in the space 2 round the container 1. In this space 2 there is a medium present, for example oil or water, serving to heat up the space 1 and the mixture 8 present therein. The actual heating is achieved by means of a heating element 10, formed by e.g. an electrical resistance. In order to limit heat losses, the device is preferably fitted with an insulating layer 3.

Further control of the temperature is achieved by means of a second temperature sensor 11, which measures the temperature of the evaporated liquid. For this purpose, said second sensor 11 is fitted in the upper part of the container. In addition, at the output of the condenser 4 a third temperature sensor 12 is mounted, which measures the temperature of the condensed liquid 6. The latter is collected in another container 5. The various sensors 9, 11 and 12, together with the heating element 10, are connected to a control unit 7.

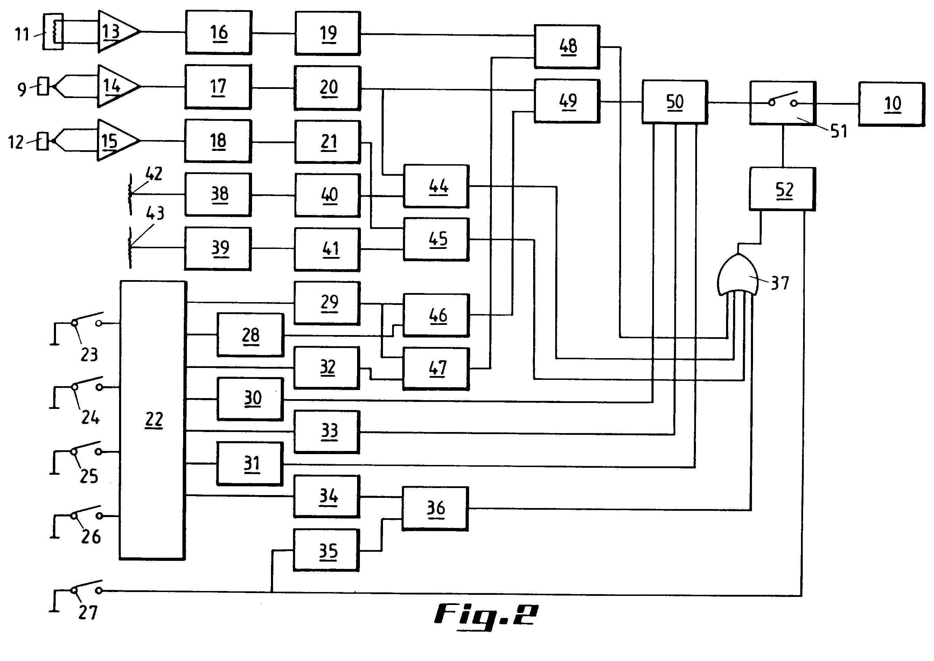

The temperature monitoring and the regulation of the supply of energy to the heating element are further carried out by means of the control unit 7. The structure of the control unit is shown schematically in Fig. 2. The temperature sensors 11, 9 and 12 are connected to amplifiers 13, 14 and 15 respectively. The amplifiers are connected to analog/digital converters 16, 17 and 18 respectively, which sample the signals from the sensors. For example, sampling is carried out 80 x per second, and a 10 bit word is generated by each sampling. In order to reduce the effects of sampling errors and instability in the electronics, an average of the samples obtained per unit time is taken. For example, an average is taken of the 80 words generated per second by the elements 19, 20 and 21 in each case.

The control unit 7 also contains a setting device 22 for setting a number of parameters described in more detail below. In the example of an embodiment shown, the parameter to be set is selected by means of a rotary selector knob 23, and the chosen value is set by means of an incrementor 24 and a decrementor 25. A safety device 26, for example a maximum time for the heating, may also be included in the circuit and can also be set. Finally there is a reset switch 27 in order to reset the device to an initial condition.

The setting device 12 is connected to a first memory 29 for storing at least one value of the evaporation temperature of at least one liquid to be distilled. The setting device 22 is further connected to a second, third and fourth memory 30, 31 and 33 respectively, for storing a relative bandwidth parameter (proportional band), a time differential and a time integral respectively. A first computing unit 28 connected to the setting device is used to calculate a differential between the temperature to which the mixture is to be heated and a set evaporation temperature. A fifth and sixth memory 32 and 34 respectively are connected to the setting device and are used to store e.g. a maximum temperature of the medium and the maximum duration respectively. In an alternative embodiment, the fifth and sixth memories also contain an computing unit.

The sixth memory 34 is connected to the first input of a first comparator 36, whose second input is connected to the output of a clock 35. A reset input of the clock 35 is connected to the reset switch 27. An output from the first comparator 36 is connected to the first input of a logical OR port 37. The first comparator provides a signal at its output, for example a logical 1 if the time obtained from the clock corresponds to that stored in the sixth memory 34.

A maximum temperature for the medium and the evaporation temperature is supplied to an analog/digital converter 38 and 39 respectively via an input 42 and 43, said comparators being connected to elements 40 and 41 respectively. The elements 40 and 41 are analogous to elements 19, 20 and 21 respectively, and also determine an average value. The components 38 and 40, or 39 and 41, respectively, can be replaced by a buffer. However, the configuration shown in Fig. 2 is chosen because of the integration facilities.

A second comparator 44 has a first and a second input connected to the output of the device 20 and 40 respectively, and compares the actual, sampled temperature of the medium with a set maximum value. Whenever the temperature of the medium reaches the set maximum value, the second comparator 44 provides a signal, for example a logical 1 at a second input of the logical OR port 37.

A third comparator 45 has a first and second input connected to the output of elements 21 and 41 respectively, and compares the actual, sampled condensation temperature of the condensed liquid with a set maximum condensation temperature. Whenever the sampled condensation temperature reaches a set maximum value, the third comparator provides a signal, for example a logical 1 at a third input of the logical OR port 37.

The temperature to which the medium is to be heated is determined by a second computing unit 46 whose first and second inputs are connected to the output of the first memory 29 and the first computing unit 28 respectively. The second computing unit receives the evaporation temperature ($T_D$) stored in the first memory 29 and the differential ($\Delta T = T_M - T_D$) calculated by the first computing unit, and so calculates $T_M$.

A third computing unit 47 has a first and a second input connected to the output of the first and fifth memory 29 and 32 respectively. The third computing unit compares the evaporation temperature with the maximum value stored in the fifth memory. A comparison signal is obtained at an outputgate of the third computing unit 47 if the temperature of the medium is higher than the set maximum value.

An output from the second and third computing unit is connected to a first input of a fourth comparator 48 and a fourth computing unit 49 respectively, whose second input is connected to an output of the element 19 and 20 respectively. The fourth comparator provides a signal, for example a logical 1, to a fourth input of the logical OR port 37 whenever the sampled evaporation temperature exceeds the set maximum. The fourth computing unit 49 calculates the differential ($\Delta T_M = T_M - T_{MA}$) between the actual, sampled temperature ($T_{MA}$) of the medium and the calculated temperature $T_M$ of the medium.

This differential $\Delta T_M$ is supplied to a data input of a data processing unit 50, for example a microprocessor 50. A first, second and third control inputs of the data processing unit 50 are connected to the output of the second, fourth and third memory 30, 33 and 31 respectively. The data output from the data processing unit 50 is connected to a switch 51 to provide an energy value $\Delta E$. A control input of the switch is connected to an output of a flip-flop 52 whose input is connected to the output of the logical OR port 37, and a reset input is connected to the reset switch 27. An output from the switch 51 is connected to the heating element 10.

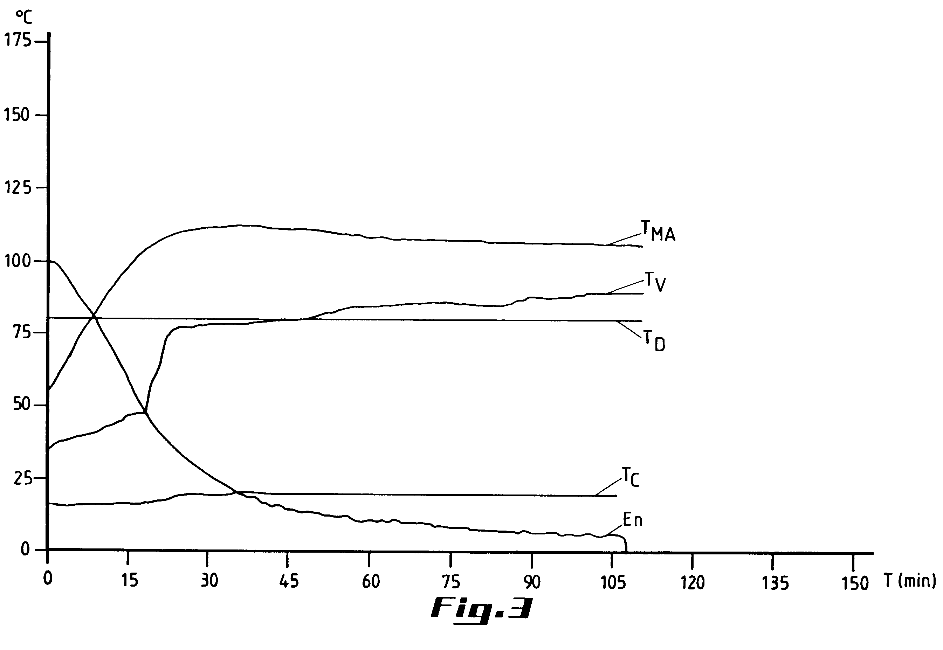

The method according to the invention and the operation of the device is now explained on the basis of the Fig. 1 and 2 and the graph shown in Fig. 3. Suppose that a predetermined liquid is to be distilled from a mixture. The mixture 8 is poured into the reservoir 1. Next, the evaporation temperature ($T_D$) of the liquid is set on the setting device 22 and stored in the first memory 29. In the graph shown in Fig. 3, $T_D = 80°C$. Further, the differential $\Delta T$ is set and stored in the first computing unit 28. This differential gives the temperature difference between the set evaporation temperature $T_D$ and the temperature to which the medium is to be heated. In the example of an embodiment shown in the graph in Fig. 3, this differential $\Delta T$ is equal to 30°C. The relative bandwidth (Kpb, in °C), the differential time (Ktd) and the integration time (Kti) are stored in the second, third and fourth memory 30, 31 and 33 respectively, after they have been set. A maximum time tmax is also set and stored in the sixth memory 34. The value tmax can be e.g. 120 minutes. Further, a maximum temperature Tmax, for example Tmax = 120°C, is stored in the fifth memory.

It is clear that the values Kpb, Kti, Ktd, Tmax and tmax do not necessarily have to be set for each operation; they can also be set once only, for example when the device is repeatedly used to distil the same liquid. However, correct setting of these values is necessary to ensure correct functioning of the device. Further, a maximum temperature for the medium, e.g. 125°C, and for the evaporation temperature, e.g. 90°, are supplied to inputs 42 and 43 respectively.

From the values received, namely $\Delta T$ and $T_D$, the second computing unit 46 calculates the first temperature $T_M = T_D + \Delta T$ to which the medium has to be heated in order to distil the liquid with evaporation temperature $T_D$ from the mixture 8. This first temperature $T_M$ is supplied to the fourth computing unit 49.

Further, the third computing unit 47 compares $T_D$ with Tmax. If $T_D \geq$ Tmax, a logical 1 is supplied to the fourth comparator 48, with the result that the flip-flop is activated via the logical OR port 37 and the switch 51 is opened, so that it is no longer possible for the medium to be heated, thus protecting the device against overheating. However, if $T_D \leq$ Tmax, a logical 0 is supplied by the third computing unit 47, so that the flip-flop 52 is not activated.

4

After setting the necessary parameters, the user presses the reset button 27 in order to start the clock 35 and reset the flip-flop. After being started in this way, the clock runs. If the distillation process is not completed at the moment when the time t supplied by the clock corresponds to tmax, the first comparator 36 generates a logical 1 which activates the flip-flop 52 via the logical OR port 37. As a result, the switch 52 is opened and the distillation process is halted. In this way, the device is provided with time control.

After the device is started, the evaporation temperature $T_V$, the temperature of the medium $T_{MA}$ and the temperature of the condensed liquid $T_C$ are sampled by sensors 11, 9 and 12 respectively. The graph in Fig. 3 shows the curves of these measured temperatures. The temperature of the medium, sampled by sensor 9, is supplied, after an average has been calculated by element 20, to the fourth computing unit 49. The latter calculates the differential $\Delta T_M = T_M - T_{MA}$ supplied to the input of the data processing unit 50.

The data processing unit 50 also receives the values Ktd, Kti and Kpb at its data inputs. The data processing unit now determines an energy value $E_n$ by applying the following mathematical operation (PID algorithm):

$$E_n = \frac{100}{Kpb} \left[ \Delta T_{Mn} + \left[ \sum_{j=0}^{n} \frac{ts}{Kti} (\Delta T_{Mn}) \right] + \frac{Ktd}{ts} (\Delta T_{Mn} - \Delta T_{Mn-1}) \right]$$

where

ts = the sampling period

n = the total number of sampling periods since the start of the process

$\Delta T_{Mn}$ = the differential determined at time $t_j = nxts$

$\Delta T_{Mn-1}$ = the differential determined at time $t_j$, = (n-1)xts

The energy value $E_n$ determined in this way is converted into a current value, in the case where an electrical resistor is used for the heating element 10. In this way, the current which has to flow through the resistor in order to heat the medium is determined. The energy or current value $E_n$ is supplied to the heating element 10 via the switch 51.

As can be seen from the graph in Fig. 3, the calculated energy value $E_n$ shows a falling trend. This is because the size of the differential $\Delta T_{Mn} - \Delta T_{Mn-1}$ decreases the more the medium is heated. The temperature of the medium on the other hand increases sharply in the initial phase, since a large amount of energy is supplied in this initial phase. When however the temperature $T_{MA}$ of the medium reaches the set value $T_M$, the supply of energy remains more or less constant. However, the energy value is not zero, since energy is necessary for the distillation process to continue; heat is always necessary for evaporation, while the evaporation temperature $T_V$ remains more or less constant, fluctuating round the set value $T_D$.

As can be seen from the same Fig. 3, the differential $\Delta T$ between $T_{Mn}$ and $T_D$ remains more or less constant at the set value. When however $T_V$ becomes too great, the third comparator 45 operates, so that switch 51 is opened and the supply of energy falls abruptly to zero.

Fig. 3 shows clearly how by applying the method according to the invention the evaporation temperature $T_V$ and the condensation temperature $T_C$ are both kept well under control, without any fluctuations up and down. This makes it possible to keep the evaporation temperature nicely in the region of the evaporation temperature of the liquid to be distilled, so that the chance of impurities remains small.

Furthermore, the various safety devices ensure that there is no overheating, so no damage occurs to the device.

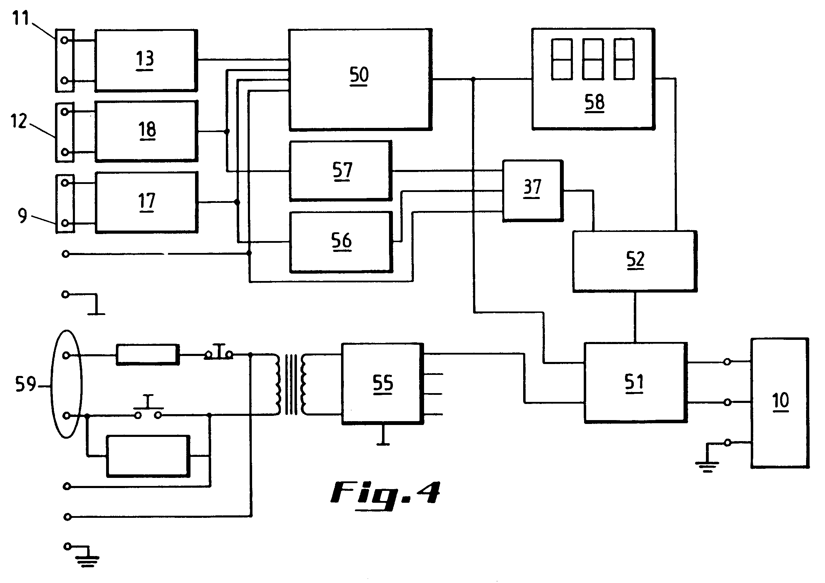

The electrical structure of the device is shown in Fig. 4. The first temperature sensor 9 is formed by e.g. a PT 100 sensor mounted in a Wheatstone bridge comprised in an amplifier 17. The voltage output of the bridge is amplified by the analog operational amplifier, using an amplification factor which can be adjusted by means of a potentiometer. An adjustable offset voltage is also connected to the input of the amplifier. These adjustment facilities enable the input channel to be calibrated.

At the voltage outputs of the second and third temperature sensors, 11 and 12 respectively, a cold junction voltage is obtained which is connected in series with an input voltage from the amplifiers 17 and 18 respectively. The amplifiers are also fitted with a potentiometer for calibration purposes.

The outputs of the amplifiers 13, 17 and 18 are connected to an analog/digital converter which forms part of the data processing unit 50. An output from the second and third amplifier 17 and 18 respectively is further connected to a first and second analog comparator 56 and 57 respectively. The first and second comparators 56 and 57 respectively compare the values supplied to them, namely the temperature of the medium and the condensation temperature respectively, with a first and second preset value respectively.

5

When the value supplied to them is greater than said preset value, an alarm signal is generated and supplied to the logical OR port 37.

The data processing unit 50 has a data output connected to a display unit 58 showing among other things the amount of energy supplied to the heating element 10, for example in Amperes.

The switch 51, formed by e.g. a relay, is connected to a supply 55, formed by e.g. the secondary winding of a transformer whose primary may be connected to the mains voltage 59.

**Claims**

1. Method for distilling at least one predetermined liquid from an essentially liquid mixture, said mixture being heated by means of a medium which is heated up to a first set temperature, said first temperature being set in accordance with the evaporation temperature of said liquid, characterised in that a differential is set between a set evaporating temperature and the first temperature to be reached, said first temperature being determined on the basis of said evaporation temperature and said differential, said temperature of the medium being sampled repeatedly, each time determining the supply of energy for heating said medium on the basis of the sample value and said first temperature.

2. Method according to claim 1, characterised in that said first temperature is determined from the sum of said evaporation temperature and said differential.

3. Method according to claim 1 or 2, characterised in that a second temperature is sampled from the vapour coming from the heated mixture and compared with a set evaporation temperature of the liquid to be distilled, said energy supply being interrupted if said second temperature rises above said set evaporation temperature.

4. Method according to claim 1, 2 or 3, characterised in that a third temperature of the condensed liquid is sampled and compared with a set condensation temperature, said energy supply being interrupted if said condensation temperature rises above said set condensation temperature.

5. Method according to any of claims 1 to 4, characterised in that a maximum temperature for the medium is set, and that said heating of the medium is switched off if said maximum temperature is reached.

6. Method according to any of claims 1 to 5, characterised in that a maximum operating time is set and that said energy supply is interrupted if said maximum operating time is exceeded.

7. Device for distilling at least one predetermined liquid out of an essentially liquid mixture, said device comprising a container (1) for holding a mixture (8), together with a heating element (10) mounted in a space in which a heating medium for heating the mixture is placed, said heating element being connected to a regulating device serving to control the energy supply to the heating element, said regulating device further serving to set a first temperature, characterised in that the regulating device has a first and a second input to which are supplied, respectively, an evaporation temperature of the liquid and a differential between said evaporation temperature and said first temperature, said regulating device further serving to determine said first temperature on the basis of said differential and evaporation temperature, said regulating device being further connected to sampling means fitted with a first temperature sensor to sample the temperature of the medium, said regulating device serving to determine said energy supply on the basis of the sampling values and the first temperature.

*Fig.1*

Fig.2

Fig.3

EP 0 603 926 A1

*Fig.4*

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | FR-A-2 405 079 (CHARPENET LOUIS) * page 2, line 28 - page 3, line 19; figure 2 * | 1,7 | B01D3/42 |
| A | FR-A-2 361 691 (SHELL INTERNATIONALE RESEARCH MAATSCHAPPIJ BV) * claims * | 1 | |
| A | US-A-3 464 895 (UNIVERSAL OIL) | 1 | |
| A | GB-A-2 122 386 (GCA CORPORATION) | 1 | |

TECHNICAL FIELDS
SEARCHED      (Int.Cl.5)

B01D

The present search report has been drawn up for all claims

| Place of search | Date of completion of the search | Examiner |
|---|---|---|
| THE HAGUE | 24 March 1994 | Van Belleghem, W |